# EUROPÄISCHE PATENTANMELDUNG

(11) **EP 1 352 777 A1**
(43) Veröffentlichungstag der Anmeldung: **15.10.2003**
(21) Anmeldenummer: 02027757.0
(22) Anmeldetag: 11.12.2002
(51) Int. Cl.: B60L 5/38, B60M 1/30

(54) **Stromabnehmer**

(30) Priorität: 11.04.2002 DE 20205710 U
(71) Anmelder: Fahrleitungsbau GmbH, D-45329 Essen (DE)
(72) Erfinder: Dörlöchter, Michael, 44807 Bochum (DE)
(74) Vertreter: Rohmann, Michael, Dr.

(57) **Zusammenfassung**

Stromabnehmer für eine Schleifleitungsstromschiene mit zumindest einem Aufnahmegehäuse und zumindest einem von einem Aufnahmegehäuse aufgenommenen Schleifleitungskontakt aus einem elektrisch leitenden Material. An dem Stromabnehmer ist zumindest ein Bewegungssensor vorgesehen, mit welchem Bewegungssensor Auslenkungen des Stromabnehmers aufgrund von Unregelmäßigkeiten in seinem Schleifleitungsweg erfassbar sind.

## Beschreibung

Die Erfindung betrifft einen Stromabnehmer für eine Schleifleitungsstromschiene mit zumindest einem Aufnahmegehäuse und zumindest einem von einem Aufnahmegehäuse aufgenommenen Schleifleitungskontakt aus einem elektrisch leitendem Material. - Solche Stromabnehmer werden beispielsweise in fördertechnischen Anlagen wie Elektrohängebahnen oder Elektrotragbahnen eingesetzt. In diesen Schleifleitungsanlagen müssen die Schleifleitungskontakte möglichst stets Kontakt zur Schleifleitungsstromschiene haben, damit eine funktionssichere Energieübertragung zu den mobilen Verbrauchern gewährleistet bleibt.

Bei den aus der Praxis bekannten Stromabnehmern treten Störungen des Kontaktes zwischen Stromabnehmer und Schleifleitungsstromschiene häufig an Weichenübergängen, Stoßstellenübergängen oder aufgrund abgerissener Stromabnehmer oder aufgrund defekter Schienenverbinder auf. Bei erheblichen Störungen können längere Betriebsausfälle die Folge sein. Es ist daher wünschenswert, dass Störungen an den Schleifleitungsstromschienen bzw. im Schleifleitungsweg der Stromabnehmer rechtzeitig und vorbeugend erkannt werden, damit Abhilfe geschaffen werden kann.

Der Erfindung liegt das technische Problem zugrunde, einen Stromabnehmer der eingangs genannten Art anzugeben, mit dem Störungen an den Schleifleitungsstromschienen bzw. im Schleifleitungsweg des Stromabnehmers funktionssicher und effektiv rechtzeitig erkannt werden können.

Zur Lösung dieses technischen Problems lehrt die Erfindung einen Stromabnehmer der eingangs genannten Art, welcher dadurch gekennzeichnet ist, dass an dem Stromabnehmer zumindest ein Bewegungssensor vorgesehen ist, mit welchem Bewegungssensor Auslenkungen des Stromabnehmers aufgrund von Unregelmäßigkeiten in seinem Schleifleitungsweg erfassbar sind.

Der erfindungsgemäße Stromabnehmer kann beispielsweise als Einarmschleifer, Doppelkontaktschleifer, Doppelstromabnehmer bzw. Doppel-Einarmschleifer ausgebildet sein. Der Stromabnehmer kann einen Schleifleitungskontakt aufweisen oder auch vorzugsweise zwei Schleifleitungskontakte.

Der Erfindung liegt die Erkenntnis zugrunde, dass mit einem erfindungsgemäßen Bewegungssensor an dem Stromabnehmer Unregelmäßigkeiten an den Schleifleitungsstromschienen bzw. im Schleifleitungsweg funktionssicher erkannt werden können. Der Erfindung liegt weiterhin die Erkenntnis zugrunde, dass die Unregelmäßigkeiten im Schleifleitungsweg Stöße bzw. Prallschläge an dem Stromabnehmer bzw. an den Schleifleitungskontakten der Stromabnehmer erzeugen, die mit einem Bewegungssensor effektiv erfasst werden können. Solche Prallschläge entstehen beispielsweise durch Versatz an Stoßstellen, an nichtfluchtenden Übergängen der Schleifleitungsstromschiene oder durch abgerissene Stromabnehmer oder an defekten Schienenverbindern. Mit dem erfindungsgemäßen Stromabnehmer können auf einfache Weise Unregelmäßigkeiten bzw. Störungen im Schleifleitungsweg frühzeitig erkannt werden, sodass durch entsprechende Instandhaltungsoder Reparaturmaßnahmen rechtzeitig Abhilfe geschaffen werden kann.

Nach einer sehr bevorzugten Ausführungsform der Erfindung ist der Bewegungssensor ein zweiaxialer Beschleunigungssensor. Mit diesem Bewegungssensor können also Auslenkungen bzw. Beschleunigungen bezüglich zweier Raumachsen erfasst werden. Dieser Bewegungssensor hat sich im Rahmen der Erfindung besonders bewährt.

Es liegt im Rahmen der Erfindung, dass eine elektronische Auswertungseinrichtung vorgesehen ist, der die vom Bewegungssensor erfassten Auslenkungen in Form von Auslenkungssignalen zuführbar sind. Zweckmäßigerweise handelt es sich bei den Auslenkungssignalen um Spannungssignale, die der elektronischen Auswertungseinrichtung zugeführt werden. Es liegt dabei im Rahmen der Erfindung, dass die Spannung proportional der Auslenkung bzw. der Beschleunigung ist. Nach einer Ausführungsform kann die elektronische Auswertungseinrichtung unmittelbar am Stromabnehmer, beispielsweise am Aufnahmegehäuse befestigt sein. Nach einer anderen Ausführungsform ist dagegen die elektronische Auswertungseinrichtung außerhalb des Stromabnehmers angeordnet und der Bewegungssensor ist zweckmäßigerweise über ein flexibles Kabel an die elektronische Auswertungseinrichtung angeschlossen. Es liegt im Rahmen der Erfindung, dass die elektronische Auswertungseinrichtung digitale Signale an eine Steuer- und/oder Regeleinrichtung sendet. Die Steuer- und/oder Regeleinrichtung ist zweckmäßigerweise mit einem Mikrocomputer ausgestattet, dem die digitalen Signale zugeleitet werden. Nach sehr bevorzugter Ausführungsform der Erfindung wird bei Messung bzw. bei Erfassung eines Auslenkungsmaximums von der Steuerund/oder Regeleinrichtung ein Alarmsignal abgegeben. Dabei liegt es im Rahmen der Erfindung, dass das genannte Auslenkungsmaximum einstellbar bzw. vorgebbar ist. Wenn also der erfindungsgemäße Stromabnehmer mit Prallschlägen einer bestimmten Größenordnung beaufschlagt wird, gibt die Steuer- und/oder Regeleinrichtung ein Alarmsignal aus.

Nach einer Ausführungsform der Erfindung wird der Bewegungssensor von dem Aufnahmegehäuse aufgenommen. Der Bewegungssensor kann dabei in einer taschenförmigen Aufnahme des Aufnahmegehäuses angeordnet sein. Es liegt im Rahmen der Erfindung, dass der Bewegungssensor lediglich eingesteckt wird, oder aber über eine Rastverbindung befestigt wird. - Nach einer anderen Ausführungsform der Erfindung ist der Bewegungssensor an dem Schleifleitungskontakt befestigt. Der Bewegungssensor kann beispielsweise an dem Schleifleitungskontakt angeklebt sein.

Nachfolgend wird die Erfindung anhand einer lediglich ein Ausführungsbeispiel darstellenden Zeichnung näher erläutert. Es zeigen in schematischer Darstellung:
- Fig. 1: eine Draufsicht auf ein Stromabnehmeraggregat aus einer Mehrzahl von Stromabnehmern,
- Fig. 2: eine Seitenansicht eines erfindungsgemäßen Strom- abnehmers,
- Fig. 3: den Ausschnitt A aus Fig. 2 in vergrößerter Dar- stellung,
- Fig. 4: einen Schnitt B-B durch den Gegenstand nach Fig. 3 und
- Fig. 5: den Gegenstand nach Fig. 2 in einer anderen Aus- führungsform.

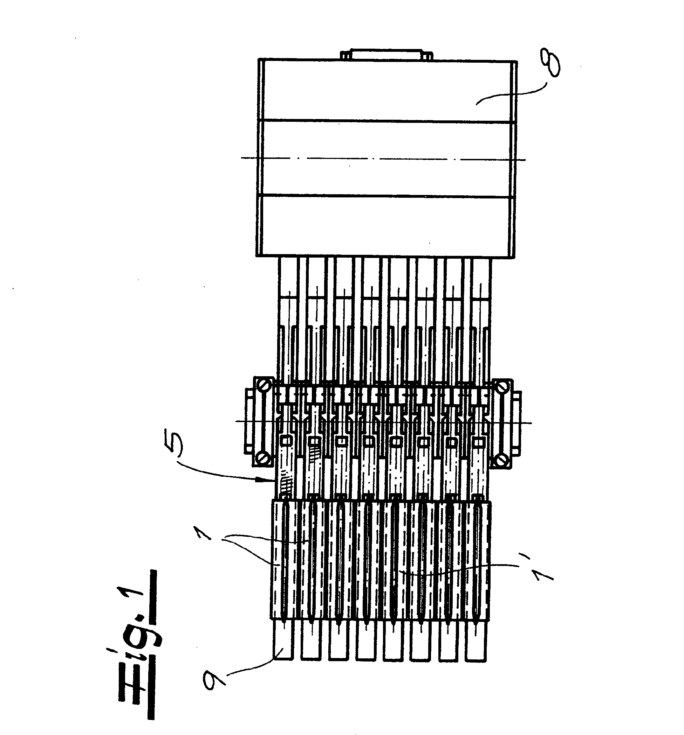

Fig. 1 zeigt zunächst eine Draufsicht auf ein Stromabnehmeraggregat aus einer Mehrzahl von nebeneinander angeordneten Stromabnehmern 1, die einer nichtdargestellten Schleifleitungsstromschiene zugeordnet sind. Unter den Stromabnehmern 1 ist auch ein erfindungsgemäßer Stromabnehmer 1' mit daran angeschlossenem Bewegungssensor 2.

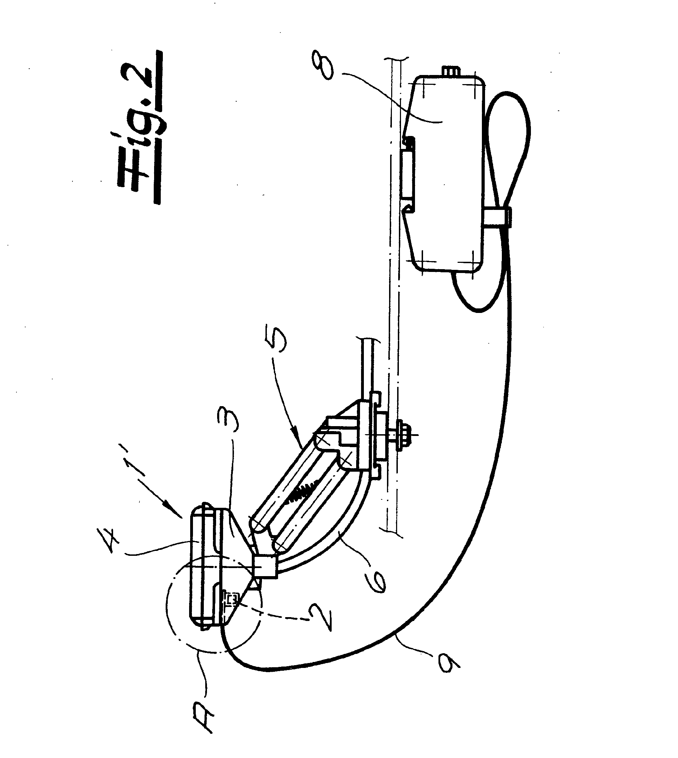

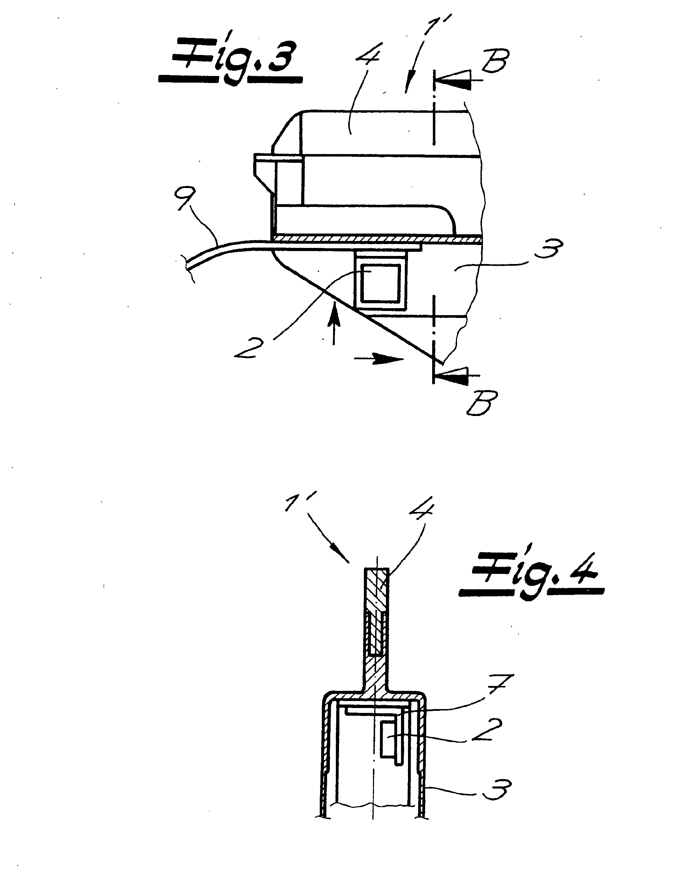

Fig. 2 zeigt den einzelnen erfindungsgemäßen Stromabnehmer 1' mit dem Bewegungssensor 2 in einer Seitenansicht. Dieser Stromabnehmer 1' weist ein Aufnahmegehäuse 3 mit einem von dem Aufnahmegehäuse 3 aufgenommenen Schleifleitungskontakt 4 aus einem elektrisch leitenden Material auf. Das Aufnahmegehäuse 3 wird in an sich üblicher Weise federnd von einem Parallelogrammgestänge 5 gehalten. Die Stromversorgung des Schleifleitungskontaktes 4 erfolgt über das Kabel 6. In dem Aufnahmegehäuse 3 des Stromabnehmers 1' wird der Bewegungssensor 2 aufgenommen, mit welchem Bewegungssensor 2 Auslenkungen des Stromabnehmers 1' aufgrund von Unregelmäßigkeiten in seinem Schleifleitungsweg erfasst werden können. Der Bewegungssensor 2 ist vorzugsweise und im Ausführungsbeispiel als Beschleunigungssensor ausgeführt. Mit einem solchen Beschleunigungssensor können Prallschläge, mit denen der Stromabnehmer 1' beaufschlagt wird, funktionssicher und präzise festgestellt werden. Vorzugsweise und im Ausführungsbeispiel ist der Bewegungssensor als zweiaxialer Beschleunigungssensor ausgebildet. In der Fig. 3 wurden die beiden Achsen für einen solchen Beschleunigungssensor durch Pfeile angedeutet.

Der Fig. 4 ist entnehmbar, dass der Bewegungssensor 2 mittels eines Winkelsockels 7 an dem Aufnahmegehäuse 3 befestigt ist. Im Ausführungsbeispiel nach den Fig. 1 bis 4 ist eine dort nicht näher dargestellte elektronische Auswertungseinrichtung 8 außerhalb des Stromabnehmers 1' vorgesehen. Der Bewegungssensor 2 ist bei dieser Ausführungsform über ein flexibles Flachbandkabel 9 mit der elektronischen Auswertungseinrichtung 8 verbunden.

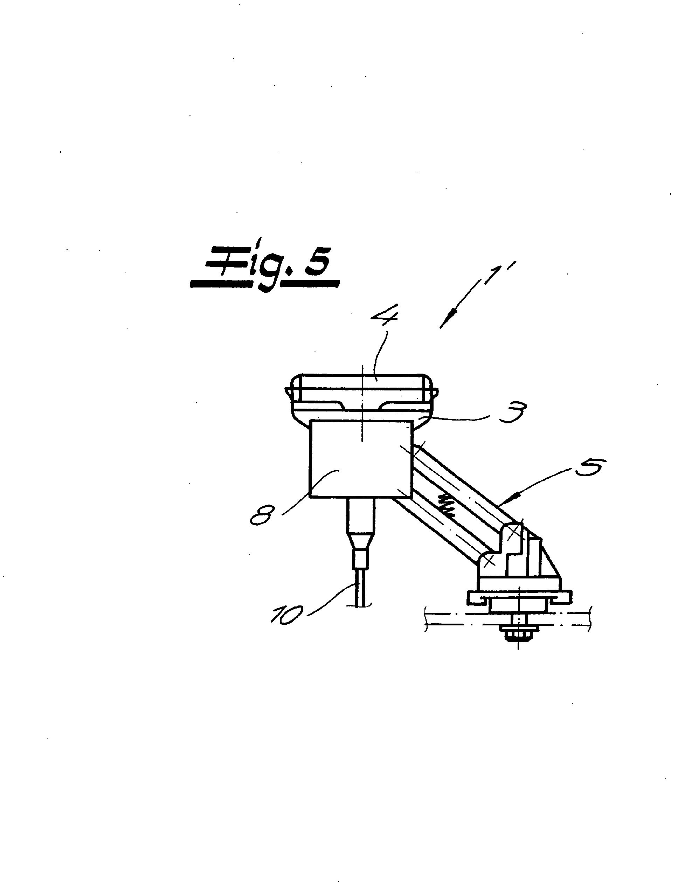

Im Ausführungsbeispiel nach Fig. 5 ist eine elektronische Auswertungseinrichtung 8 unmittelbar an das Aufnahmegehäuse 3 des Stromabnehmers 1' angeschlossen. Die elektronische Auswertungseinrichtung 8 ist im Ausführungsbeispiel nach Fig. 5 in Form einer Platine verwirklicht. An diese Platine ist ein flexibles Verbindungskabel 10 angeschlossen, über welches Verbindungskabel 10 die elektronische Auswertungseinrichtung 8 mit einer nicht dargestellten Steuerund/oder Regeleinrichtung verbunden ist.

## Patentansprüche

1. Stromabnehmer (1') für eine Schleifleitungsstromschiene mit zumindest einem Aufnahmegehäuse (3) und zumindest einem von einem Aufnahmegehäuse (3) aufgenommenen Schleifleitungskontakt (4) aus einem elektrisch leitenden Material, **dadurch gekennzeichnet, dass** an dem Stromabnehmer (1') zumindest ein Bewegungssensor (2) vorgesehen ist, mit welchem Bewegungssensor (2) Auslenkungen des Stromabnehmers (1') aufgrund von Unregelmäßigkeiten in seinem Schleifleitungsweg erfassbar sind.

2. Stromabnehmer nach Anspruch 1, **dadurch gekennzeichnet, dass** der Bewegungssensor (2) ein zweiaxialer Beschleunigungssensor ist.

3. Stromabnehmer nach einem der Ansprüche 1 oder 2, **dadurch gekennzeichnet, dass** eine elektronische Auswertungseinrichtung (8) vorgesehen ist, der die vom Bewegungssensor (2) erfassten Auslenkungen in Form von Auslenkungssignalen zuführbar sind.

4. Stromabnehmer nach einem der Ansprüche 1 bis 3, **dadurch gekennzeichnet, dass** der Bewegungssensor (2) von dem Aufnahmegehäuse (3) aufgenommen wird.

5. Stromabnehmer nach einem der Ansprüche 1 bis 3, **dadurch gekennzeichnet, dass** der Bewegungssensor (2) an dem Schleifleitungskontakt (4) befestigt ist.
